(19) Europäisches Patentamt
European Patent Office
Office européen des brevets

(11) **EP 2 169 436 B1**

(12) **FASCICULE DE BREVET EUROPEEN**

(45) Date de publication et mention
de la délivrance du brevet:
**25.11.2015 Bulletin 2015/48**

(51) Int Cl.:
***G02B 6/122*** *(2006.01)*  ***G02B 6/30*** *(2006.01)*

(21) Numéro de dépôt: **09171501.1**

(22) Date de dépôt: **28.09.2009**

(54) **Coupleur de lumière entre une fibre optique et un guide d'onde réalisé sur un substrat SOI**

Lichtkoppler zwischen einer Lichtleitfaser und einem Wellenleiter auf einem Substrat

Light coupler between an optical fibre and a waveguide made on an SOI substrate

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **30.09.2008 FR 0856578**

(43) Date de publication de la demande:
**31.03.2010 Bulletin 2010/13**

(73) Titulaire: **Commissariat à l'Énergie Atomique et aux Énergies Alternatives 75015 Paris (FR)**

(72) Inventeurs:
• **Ben Bakir, Badhise 38000 Grenoble (FR)**
• **Fedeli, Jean-Marc 38120 Saint Egrève (FR)**

(74) Mandataire: **Ilgart, Jean-Christophe et al BREVALEX 95, rue d'Amsterdam 75378 Paris Cedex 8 (FR)**

(56) Documents cités:
**EP-A- 1 400 822**

• **YAMADA K ET AL: "Silicon wire waveguiding system: fundamental characteristics and applications" ELECTRONICS AND COMMUNICATIONS IN JAPAN, PART 2 (ELECTRONICS) SCRIPTA TECHNICA USA, vol. 89, no. 3, 2006, pages 42-55, XP002529013 ISSN: 8756-663X**

EP 2 169 436 B1

## Description

## DOMAINE TECHNIQUE

L'invention se rapporte à un coupleur de lumière entre une fibre optique et un guide d'onde réalisé sur un substrat SOI. Un tel coupleur de lumière trouve des applications dans le domaine de l'optoélectronique et notamment pour les circuits nanophotoniques.

## ÉTAT DE LA TECHNIQUE ANTÉRIEURE

Les composants optoélectroniques réalisés à partir de guides optiques planaires microstructurés ou nanostructurés permettent de mettre en oeuvre des fonctions qui leur sont propres (résonateur, multiplexeur/démultiplexeur en longueur d'onde, coupleur, ...) et permettent également d'obtenir un couplage efficace avec une fibre optique pour une communication avec des circuits extérieurs.

Les composants optoélectroniques de couplage interviennent notamment dans les réseaux de transmission de données par fibre optique et dans les circuits photoniques intégrés (intra-puce et inter-puce). Un tel composant peut être considéré comme une brique de base de dispositifs plus complexes.

Les technologies des guides optiques planaires permettent d'intégrer de façon compacte, et sur une même puce, des fonctions complexes de gestion de faisceaux optiques comme le multiplexage, le démultiplexage, la modulation, le routage spectral, etc... Ces fonctions peuvent être aussi bien dédiées à des liaisons optiques très courte distance, à l'échelle du millimètre (comme les communications intra-puce) que pour de très longues distances, de l'ordre de plusieurs kilomètres (comme un réseau métropolitain). En outre, ces fonctions optiques apporteront une solution aux problèmes liés à l'augmentation du débit des bus d'interconnexion.

L'intégration sur une même puce d'une forte densité de fonctions optiques requiert une miniaturisation poussée des circuits photoniques, réduisant de ce fait la section des guides d'onde planaires à des dimensions submicroniques. Or, pour les applications moyennes et longues distances (par exemple de quelques mètres à plusieurs kilomètres), le moyen de transport privilégié est la fibre optique dont le diamètre caractéristique demeure élevé : de dix à quelques dizaines de $\mu$m typiquement. Pour atteindre un niveau de couplage optimal, l'interfaçage entre ces deux systèmes doit donc compenser cette forte désadaptation dimensionnelle.

Une autre difficulté concerne la polarisation de la lumière : le signal optique circulant dans des réseaux fibrés ne possède pas de polarisation définie : c'est une quantité aléatoire qui change continuellement avec le temps. D'autre part, un circuit intégré photonique est naturellement très sensible à la polarisation. En effet, un guide d'onde optique de rapport de forme arbitraire ne propage pas, a priori, les deux états de polarisation d'un signal optique à la même vitesse (sauf si la section du guide est rigoureusement carrée). On parle alors de dispersion en polarisation du mode optique (« polarisation mode dispersion » en anglais), ou de manière équivalente, de guide d'onde optique biréfringent. En réception, cette sensibilité est incompatible avec une connexion directe du circuit au réseau de fibres optiques dans lesquelles l'état de polarisation est à la fois méconnu et instable. Par conséquent, un des tous premiers besoins est de développer des coupleurs de lumière performants, c'est-à-dire à faible niveau de pertes et insensibles à la polarisation.

Du point de vue de la conception, on trouve une certaine redondance dans la littérature, les travaux réalisés se distinguant essentiellement par le choix des matériaux employés. Deux exemples significatifs, qui se différencient par des variantes technologiques et conceptuelles, sont donnés ci-dessous.

Le document « Polarization insensitive low-loss coupling technique between SOI waveguides and high mode field diameter single-mode fibers » de J.V. GALAN et al., Optics Express, vol. 15, n°11, 28 mai 2007, pages 7058 à 7065, divulgue un coupleur possédant une nano-pointe inversée positionnée à fleur du dispositif. L'injection de la lumière véhiculée par la fibre optique est réalisée grâce à une technique de type rainure en V (« V-groove » en anglais) largement éprouvée. Les meilleurs taux de couplage calculés demeurent cependant élevés, de l'ordre de 3,5 dB et dans une gamme spectrale relativement réduite (environ 100 nm).

Le document « Efficient silicon-on-insulator fiber coupler fabricated using 248-nm-deep UV lithography » de G. ROELKENS et al., IEEE Photonics Technology Letters, vol. 17, n°12, décembre 2005, pages 2613 à 2615 propose une approche différente. Un guide de section carrée en polymère est superposé sur la nano-pointe. L'inconvénient majeur de cette approche est que le dispositif obtenu ne fonctionne que pour la polarisation TE (pour « transverse electric ») et que les pertes sont assez élevées (typiquement -2 db). Une autre difficulté, également importante, concerne l'encapsulation et la fiabilité de la structure proposée. En outre, le polymère ne conserve pas ses propriétés dans le temps et sous fort flux lumineux. Il se dégrade en présentant une forte augmentation de son absorption.

Le document EP-A-1 400 822 décrit un coupleur de lumière entre une fibre otique et un guide d'onde. Ce coupleur est réalisé sur un substrat SOI. Il comprend un injecteur de lumière et un collecteur adiabatique. Le collecteur adiabatique est constitué par une nano-pointe inversée formée à partir de la couche mince du substrat SOI. L'injecteur recouvre le collecteur adiabatique et se présente sous la forme d'un guide d'onde en ruban.

Le document « Silicon Wire Waveguiding System : Fundamental Characteristics and Applications » de K. YAMADA et al., Electronics and Communications in Japan, Part 2, Vol. 89, No. 3, 2006 décrit aussi un tel coupleur.

**EXPOSÉ DE L'INVENTION**

Pour remédier aux inconvénients cités ci-dessus, la présente invention propose un coupleur de lumière permettant de coupler la lumière sortant d'une fibre optique à un guide d'onde, par exemple en silicium, de section rectangulaire (éventuellement de section carrée) pour les deux états de polarisation TE et TM (pour « Transverse Magnetic » en anglais). Il est à noter que la lumière peut parcourir un trajet inverse, c'est-à-dire du guide d'onde vers le guide optique. On parlera alors de coupleur bidirectionnel. Le coupleur est constitué d'un injecteur, par exemple en $SiO_x$ (silice chargée de nano-cristaux de silicium), et d'un collecteur adiabatique qui est une nano-pointe inversée en silicium.

L'invention a donc pour objet un coupleur de lumière entre une fibre optique et un guide d'onde réalisé sur un substrat semi-conducteur sur isolant, le substrat semi-conducteur sur isolant comprenant une couche mince de matériau semi-conducteur dans laquelle est réalisé le guide d'onde, le coupleur étant réalisé sur le substrat semi-conducteur sur isolant, **caractérisé en ce qu'**il comprend un injecteur de lumière et un collecteur adiabatique constitué par une nano-pointe inversée formée à partir de la couche mince de matériau semi-conducteur, l'injecteur étant formé sur l'isolant et présentant une face de réception d'une extrémité de la fibre optique, le collecteur adiabatique ayant une section transversale qui augmente depuis une première extrémité située du côté de ladite extrémité de la fibre optique jusqu'à une deuxième extrémité se raccordant au guide d'onde, l'injecteur recouvrant le collecteur adiabatique et ayant une forme de guide d'onde en arête.

L'arête du guide d'onde formant l'injecteur peut posséder une largeur invariante. Selon une autre variante de réalisation, l'arête du guide d'onde formant l'injecteur a une forme adiabatique, sa largeur décroissant depuis sa face de réception de l'extrémité de la fibre optique. Selon une variante de réalisation, la largeur de l'arête du guide d'onde formant l'injecteur décroît de manière linéaire.

Selon une variante de réalisation, la largeur de la nano-pointe formant le collecteur décroît depuis sa deuxième extrémité d'une façon choisie parmi une décroissante linéaire, une décroissance polynomiale et une décroissance exponentielle.

Selon une variante de réalisation, le coupleur comporte une couche d'encapsulation en matériau électriquement isolant, par exemple une couche d'oxyde de silicium.

Le collecteur peut être en un matériau choisi parmi le silicium, l'InP et le GaAs.

L'injecteur peut être en un matériau choisi parmi la silice chargée de nano-cristaux de silicium, le nitrure de silicium chargé en nano-cristaux de silicium et le SiON chargé ou non de nano-cristaux de silicium.

Avantageusement, le substrat semiconducteur sur isolant est un substrat silicium sur isolant. Le substrat silicium sur isolant peut alors comprendre un support supportant successivement une couche d'oxyde de silicium et une couche mince de silicium.

L'invention a aussi pour objet un procédé de réalisation d'un coupleur de lumière entre une fibre optique et un guide d'onde réalisé sur un substrat semi-conducteur sur isolant, le substrat semi-conducteur sur isolant comprenant une couche mince de matériau semi-conducteur dans laquelle est réalisé le guide d'onde, le coupleur étant réalisé sur le substrat semi-conducteur sur isolant, le procédé comprenant les étapes suivantes :

- réalisation dans la couche mince d'un collecteur adiabatique, sous forme d'une nano-pointe inversée, par gravure de la couche mince jusqu'à atteindre l'isolant,
- dépôt, sur la couche mince gravée, d'une couche d'un matériau destiné à constituer un injecteur de lumière,
- réalisation, dans ladite couche de matériau, de l'injecteur de lumière sous la forme d'un guide d'onde en arête recouvrant le collecteur adiabatique.

**BRÈVE DESCRIPTION DES DESSINS**

L'invention sera mieux comprise et d'autres avantages et particularités apparaîtront à la lecture de la description qui va suivre, donnée à titre d'exemple non limitatif, accompagnée des dessins annexés parmi lesquels :

- la figure 1 est une vue en perspective d'un coupleur de lumière selon la présente invention,
- les figures 2A à 2F illustrent un mode de réalisation d'un coupleur de lumière selon la présente invention,
- les figures 3A à 3D illustrent un mode de réalisation d'un coupleur de lumière ne faisant pas partie de la présente invention,
- la figure 4 est une vue en coupe transversale montrant un injecteur utilisable pour un coupleur de lumière selon la présente invention,
- la figure 5 est une vue en perspective d'un injecteur adiabatique utilisable pour un coupleur de lumière selon la présente invention,
- les figures 6 à 9 montrent différentes formes possibles, vues de dessus, pour un collecteur adiabatique selon la présente invention,
- les figures 10 et 11 montrent d'autres formes possibles, vues de dessus, pour un collecteur adiabatique selon la présente invention.

**DESCRIPTION DÉTAILLÉE DE MODES DE RÉALISATION PARTICULIERS DE LA PRESENTE INVENTION**

L'injecteur a une forme bien précise. Celui-ci possède une géométrie de type guide arête. Le collecteur est toujours positionné en aval de l'injecteur. Avantageusement, la nano-pointe a une largeur de départ inférieure au dixième de la longueur d'onde minimale d'opération pour éviter les problèmes liés à la diffraction du mode optique. Le couplage du mode injecté se fait progressivement à mesure que la largeur du collecteur s'agrandit jusqu'à atteindre celle du guide d'onde.

Dans la suite de la description, on va décrire des modes de réalisation mis en oeuvre sur un substrat SOI.

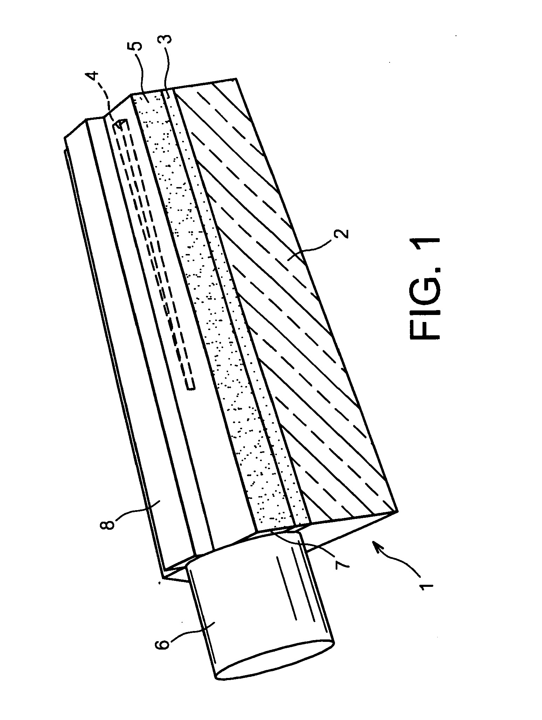

La figure 1 est une vue en perspective, et partiellement en coupe, d'un coupleur de lumière selon la présente invention. Le coupleur est réalisé sur un substrat SOI 1. Le substrat 1 comprend un support 2, par exemple en silicium, supportant successivement une couche d'oxyde de silicium 3, appelée couche d'oxyde enterrée ou BOX et d'indice optique 1,45, et une couche mince de silicium.

Le guide d'onde est réalisé sur le substrat SOI 1. La couche mince de silicium est, de manière connue de l'homme de l'art, gravée pour former le guide d'onde. A titre d'exemple, le guide d'onde peut avoir 500 nm environ de largeur et 200 nm environ d'épaisseur. Le collecteur 4 est formé en effilant l'extrémité du guide d'onde à connecter jusqu'à une largeur inférieure à 100 nm par lithographie DUV-193 nm. La variation de la largeur du collecteur 4 (ou nano-pointe), variation linéaire dans le cas de la figure 1, est réalisée sur une longueur de quelques centaines de $\mu$m. Une couche épaisse de silice chargée de nano-cristaux de silicium ($SiO_x$) et d'indice optique d'environ 1,5 est déposée, puis structurée pour définir un injecteur 5 à faible contraste d'indice pour la fibre optique 6 de 10 $\mu$m de coeur, mise en aboutement sur la face de réception 7 de l'injecteur 5. L'injecteur est un guide d'onde possédant une arête 8.

Les résultats de modélisation montrent que le mode optique de la fibre pénètre sans difficulté dans la partie injecteur du dispositif. Cette transition « toute en douceur » est assurée grâce aux rapports de forme et aux contrastes d'indice similaires. Ensuite, le mode se couple progressivement, et de manière évanescente, au guide en silicium à mesure que sa section et son indice effectif augmentent. Les simulations montrent des efficacités de couplage supérieures à 90% sur une large gamme spectrale et pour les deux états de polarisation. Il est à noter que cette conception est très robuste vis-à-vis des aléas des procédés de fabrication.

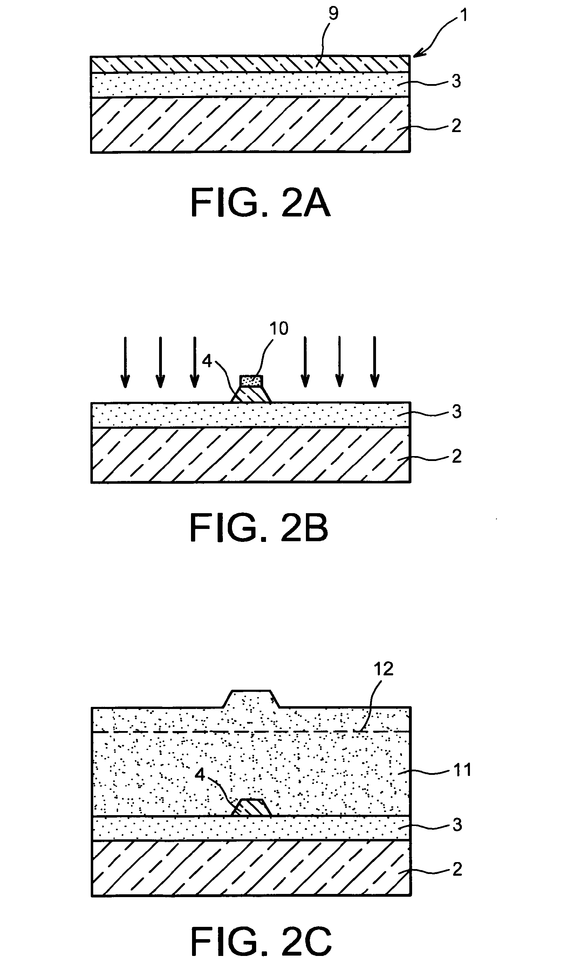

Les figures 2A à 2F illustrent un mode de réalisation d'un coupleur de lumière selon la présente invention. Ces figures montrent l'injecteur et le collecteur en coupe transversale. Dans ce mode de réalisation, l'injecteur possède une géométrie en arête.

La figure 2A montre le substrat 1 constitué du support 2 en silicium, de la couche d'oxyde enterrée 3 (par exemple de 2 $\mu$m d'épaisseur) et de la couche mince de silicium 9 (par exemple de 220 nm d'épaisseur). Le substrat 1 peut être un substrat de 220 mm.

La figure 2B illustre la définition de la nano-pointe inversée.

Un masque dur est d'abord déposé sur la couche mince de silicium 9. Ce masque dur peut avoir typiquement 100 nm d'épaisseur. Une couche de résine est ensuite déposée sur le masque dur. On procède ensuite à une lithographie de la résine par la technique dite « Deep-UV ». Le masque dur est ouvert par gravure sèche et la couche mince de silicium est gravée jusqu'à la couche d'oxyde enterrée 3 pour obtenir la micro-pointe 4. La partie subsistante 10 du masque dur est ensuite éliminée par gravure humide (chimique).

La figure 2C illustre la première étape de la formation de l'injecteur. Sur la structure obtenue précédemment, on effectue un dépôt conforme de silice chargée en nano-cristaux de silicium 11. L'épaisseur de la couche de silice 11 peut être comprise entre 1 et 10 $\mu$m selon les applications. Le dépôt peut se faire par PECVD, évaporation, pulvérisation, LPCVD, etc... Ce dépôt de silice est ensuite planarisé par polissage mécano-chimique jusqu'au niveau symbolisé par la ligne en pointillés 12.

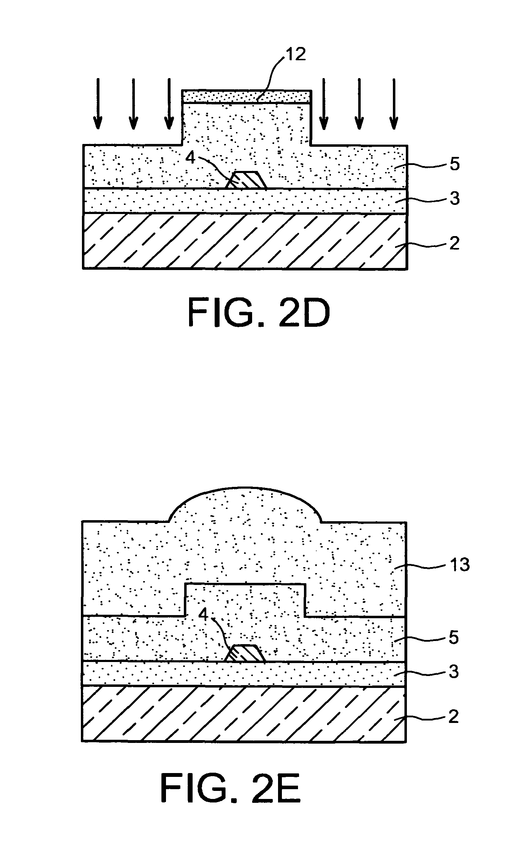

La figure 2D illustre la deuxième étape de la formation de l'injecteur. Pour cela, sur la structure obtenue précédemment, on dépose une couche de résine épaisse et on définit la largeur de l'injecteur en arête au moyen d'une lithographie « Deep-UV ». On procède à une gravure sèche partielle de la couche de $SiO_x$ 11. Cette étape est représentée à la figure 2D qui montre l'injecteur en $SiO_x$ 5 et la couche subsistante de résine 12. La couche 12 est ensuite enlevée et on procède à un nettoyage par plasma d'oxygène.

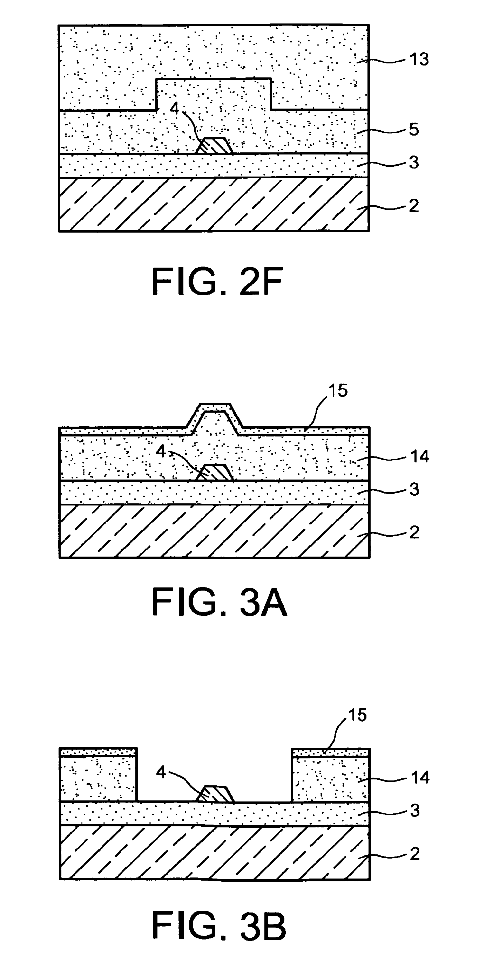

Sur la structure obtenue, on réalise un dépôt conforme de silice 13 comme le montre la figure 2E. La couche de silice 13 est ensuite planarisée par polissage mécano-chimique. On obtient le coupleur de lumière selon l'invention vu en coupe transversale sur la figure 2F.

Les figures 3A à 3D illustrent un mode de réalisation d'un coupleur de lumière possédant une géométrie en ruban. Ce mode de réalisation ne fait pas partie de la présente invention. Ces figures montrent l'injecteur et le collecteur en coupe transversale.

Ce mode de réalisation utilise un substrat SOI tel que celui illustré par la figure 2A. La nano-pointe inversée est définie de la même manière que celle illustrée par la figure 2B. Comme précédemment, la partie subsistante du masque dur est éliminée.

On effectue ensuite un dépôt conforme d'oxyde de silicium 14. Sur la couche d'oxyde de silicium 14, on dépose une fine couche de nitrure de silicium 15 SiN ou $Si_3N_4$, selon les conditions stoechiométriques du dépôt. L'épaisseur de la couche 15 peut aller de quelques centaines de nm à 1 $\mu$m. Le dépôt peut se faire par PECVD, évaporation, pulvérisation, LPCVD, etc... La structure obtenue est montée à la figure 3A.

On procède alors à la lithographie de l'injecteur. La couche de nitrure de silicium 15 est gravée soit chimiquement, soit par gravure sèche de type ionique réactive. Ensuite, la couche d'oxyde de silicium 14 est gravée à son tour jusqu'à la couche d'oxyde enterrée 3 soit chimiquement, soit par gravure sèche de type ionique réactive. Le temps de gravure est déterminé pour arrêter la gravure sur la couche d'oxyde enterrée 3. La structure obtenue est montrée à la figure 3B.

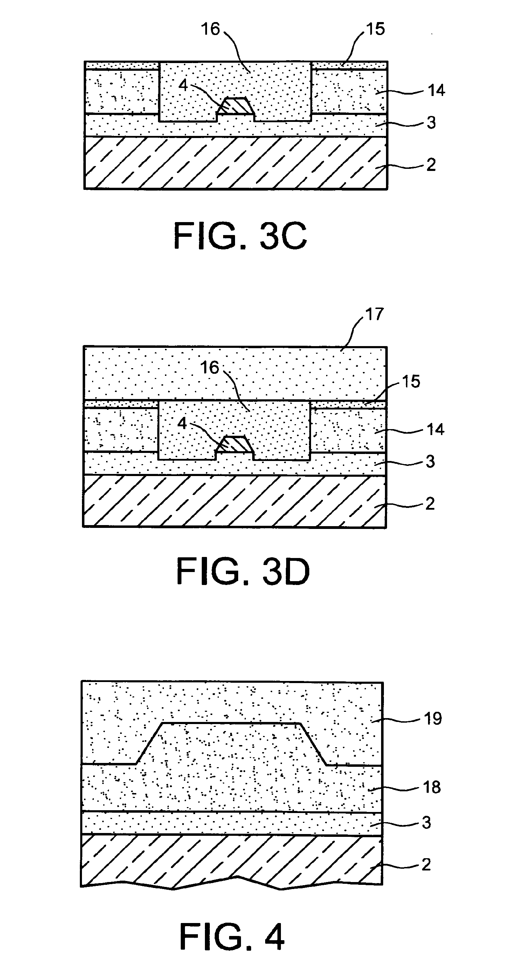

On procède ensuite au dépôt d'une couche de silice chargée de nano-cristaux de silicium jusqu'au-dessus de la couche de nitrure de silicium 15. La couche de silice chargée de nano-cristaux de silicium est planarisée par polissage mécano-chimique avec arrêt sur la couche de nitrure de silicium 15 qui est une couche dure servant d'arrêt au polissage. On obtient l'injecteur 16 comme le montre la figure 3C. On constate qu'une partie de la couche d'oxyde enterrée 3 a été chargée de nano-cristaux de silicium.

On procède ensuite à l'encapsulation de l'injecteur 16 par dépôt d'une couche de silice épaisse 17 réalisé de préférence par PECVD. La structure finale obtenue est montrée à la figure 3D.

Le coupleur de lumière selon l'invention fournit un couplage optimal, insensible à la polarisation. Il permet de réduire l'encombrement du circuit optique. L'approche technologique est simple. Les procédés de fabrication de la structure décrite exploitent des technologies dites planaires, donc compatibles CMOS.

D'un point de vue réalisation, le guide d'onde en arête est obtenu à l'aide d'une gravure partielle (voir les figures 2C et 2D). L'avantage est que le guide collecteur ne « voit » pas la gravure. Lorsqu'on veut former un injecteur qui a la forme d'un guide en ruban, on passe par les étapes représentées aux figures 3A et 3B. Dans ce cas, on réalise une gravure totale et le collecteur voit la gravure. Cette gravure totale présente l'inconvénient majeur de graver, en outre, la surface du guide, ce qui peut entraîner des rugosités et donc une efficacité moindre du guide collecteur.

Dans le mode de réalisation de l'invention décrit ci-dessus, l'injecteur est en silice chargée de nano-cristaux de silicium. Cependant, l'injecteur peut être réalisé en d'autres matériaux comme des nitrures ou d'autres oxydes, par exemple des silices nitrurées (SiON par exemple) chargées ou non de nano-cristaux de silicium. Les matériaux choisis doivent conserver un contraste d'indice assez faible par rapport au milieu environnant.

Les flancs de l'injecteur peuvent être verticaux comme sur la figure 2F. Ils peuvent aussi être obliques, dépendant du type de gravure utilisé pour le définir, comme sur la figure 4 qui est une vue en coupe transversale. Sur cette figure, la référence 18 désigne l'injecteur et la référence 19 désigne sa couche d'encapsulation.

L'injecteur peut avoir plusieurs configurations possibles selon l'axe de propagation optique. Une première approche consiste à lui donner une structuration invariante selon sa longueur. Cette approche est illustrée sur la figure 1 où la largeur de l'arête de l'injecteur est constante selon l'axe de propagation optique.

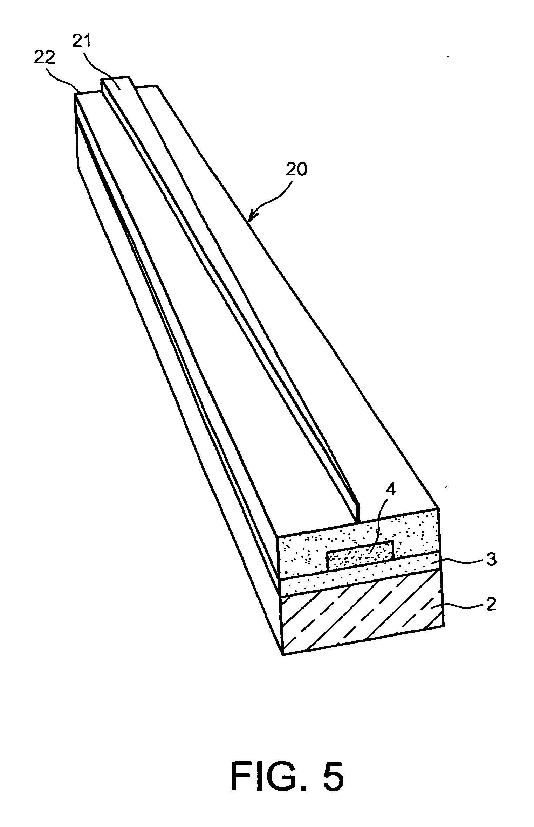

Une autre variante consiste à lui conférer une structuration adiabatique selon cet axe optique. La figure 5 montre une telle configuration. Elle montre un injecteur 20 constitué par un guide optique en arête. On voit que la largeur de l'arête 21 diminue de manière linéaire depuis sa face de réception 22, de l'extrémité d'une fibre optique.

Le matériau dans lequel est défini le collecteur (ou nano-pointe) peut être à base de silicium (cristallin, amorphe) dopé ou non. D'autres matériaux à fort indice optique comme les composés III-V (InP, GaAs) peuvent aussi être utilisés dans les circuits photoniques actifs (amplificateurs, sources lasers, modulateurs).

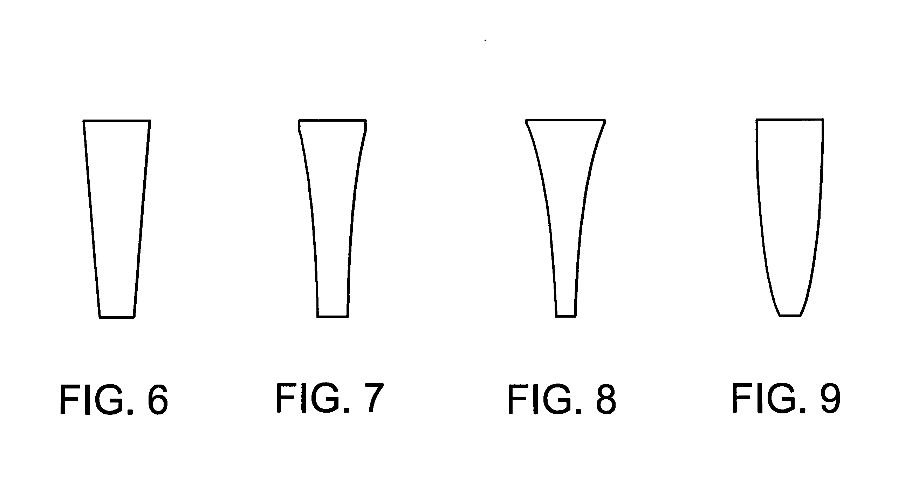

La largeur w de la nano-pointe peut varier selon l'axe de propagation de la lumière z comme montré sur les figures 6 à 9. La figure 6 montre une décroissance f(w) de la largeur de la micro-pointe qui est linéaire en fonction de z. La variation de la largeur de la micro-pointe peut aussi être polynomiale ou exponentielle. La figure 7 montre une décroissance qui est fonction de $e^z$. La figure 8 montre une décroissance qui est fonction de $z^2$. La figure 9 montre une décroissance qui est fonction de

$$\sum_n a_n z^z \ .$$

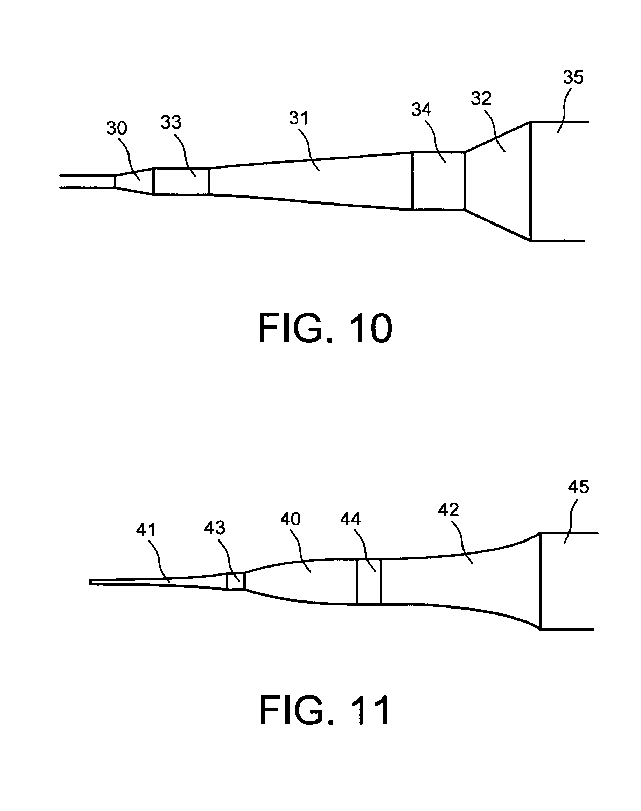

Le collecteur peut également être divisé en plusieurs zones, chacune étant définie par un motif qui lui est propre. Ces zones à motif particulier sont raccordées par des zones de raccordement. Les figures 10 et 11 montrent, vus de dessus, des exemples de tels collecteurs adiabatiques.

La figure 10 montre un collecteur comportant trois zones à décroissance linéaire du type illustré par la figure 6 : une zone d'entrée 30, une zone de collection optimisée 31 et une zone de sortie 32 vers le guide d'onde 35. Les zones 30 et 31 sont raccordées par une zone 33 de largeur constante. Les zones 31 et 32 sont raccordées par une zone 34 de largeur constante.

La figure 11 montre un collecteur comportant trois zones à variation de largeur : une zone centrale 40 à décroissance du type illustré par la figure 9, une zone d'entrée 41 et une zone de sortie 42 vers le guide d'onde 45 à décroissance du type illustré par la figure 7. Les zones 41 et 40 sont raccordées par une zone 43 de largeur constante. Les zones 40 et 42 sont raccordées par une zone 44 de largeur constante.

**Revendications**

1. Structure comprenant un guide d'onde (35, 45) et un coupleur de lumière, réalisée sur un substrat semi-conducteur sur isolant (1), le coupleur de lumière permettant un couplage luimneux entre le guide d'onde et une fibre optique (6), le substrat semi-conducteur sur isolant (1) comprenant une couche mince de matériau semi-conducteur (9) dans laquelle est réalisé le guide d'onde (35, 45), le coupleur étant réalisé sur le substrat semi-conducteur sur isolant (1), la structure comprenant un injecteur de lumière (5, 18, 20) et un collecteur adiabatique (4) constitué par une nano-pointe inversée formée à partir de la couche mince de matériau semi-conducteur (9), l'injecteur étant formé sur l'isolant (3) et présentant une face de réception (7, 22) d'une extrémité de la fibre optique (6), le collecteur adiabatique (4) ayant une section transversale qui augmente depuis une première extrémité située du côté de ladite extrémité de la fibre optique (6) jusqu'à une deuxième extrémité se raccordant au guide d'onde (35, 45), l'injecteur (5, 18, 20) recouvrant le collecteur adiabatique (4), **caractérisée en ce que** l'injecteur (5, 18, 20) a une forme de guide d'onde en arête.

2. Structure selon la revendication 1, dans laquelle l'arête du guide d'onde formant l'injecteur possède une largeur invariante.

3. Structure selon la revendication 1, dans laquelle l'arête du guide d'onde formant l'injecteur a une forme adiabatique, sa largeur décroissant depuis sa face de réception de l'extrémité de la fibre optique.

4. Structure selon la revendication 3, dans laquelle la largeur de l'arête du guide d'onde (21) formant l'injecteur (20) décroît de manière linéaire.

5. Structure selon l'une quelconque des revendications 1 à 4, dans laquelle la largeur de la nano-pointe formant le collecteur décroît depuis sa deuxième extrémité d'une façon choisie parmi une décroissante linéaire, une décroissance polynomiale et une décroissance exponentielle.

6. Structure selon l'une quelconque des revendications 1 à 5, comportant une couche d'encapsulation en matériau électriquement isolant.

7. Structure selon la revendication 6, dans laquelle la couche d'encapsulation est en oxyde de silicium.

8. Structure selon l'une quelconque des revendications 1 à 7, dans laquelle le collecteur (4) est en un matériau choisi parmi le silicium, l'InP et le GaAs.

9. Structure selon l'une quelconque des revendications 1 à 8, dans laquelle l'injecteur (4) est en un matériau choisi parmi la silice chargée de nano-cristaux de silicium, le nitrure de silicium chargé en nano-cristaux de silicium et le SiON chargé ou non de nano-cristaux de silicium.

10. Structure selon la revendication 1, dans laquelle le substrat semiconducteur sur isolant (1) est un substrat silicium sur isolant.

11. Structure selon la revendication 10, dans laquelle le substrat silicium sur isolant (1) comprend un support (2) supportant successivement une couche d'oxyde de silicium (3) et une couche mince de silicium.

12. Procédé de réalisation d'une structure comprenant un guide d'onde (35, 45) et un coupleur de lumière, la structure étant réalisée sur un substrat semi-conducteur sur isolant (1), le coupleur de lumière permettant un couplage entre le guide d'onde et une fibre optique (6), le substrat semi-conducteur sur isolant (1) comprenant une couche mince de matériau semi-conducteur (9) dans laquelle est réalisé le guide d'onde (35, 45), le coupleur étant réalisé sur le substrat semi-conducteur sur isolant (1), le procédé comprenant les étapes suivantes :

- réalisation dans la couche mince d'un collecteur adiabatique (4), sous forme d'une nano-pointe inversée, par gravure de la couche mince (9) jusqu'à atteindre l'isolant (3),
- dépôt, sur la couche mince gravée, d'une couche (11) d'un matériau destiné à constituer un injecteur de lumière,
- réalisation, dans ladite couche (11) de matériau, de l'injecteur de lumière sous la forme d'un guide d'onde en arête (5) recouvrant le collecteur adiabatique (4).

**Patentansprüche**

1. Struktur mit einem Wellenleiter (35, 45) und einem Lichtkoppler, die auf einem Halbleiter-auf-Isolator-Substrat (1) ausgebildet ist, wobei der Lichtkoppler eine Lichtkopplung zwischen dem Wellenleiter und einer Lichtleitfaser (6) ermöglicht, wobei das Halbleiter-auf-Isolator-Substrat (1) eine dünne Schicht (9) aus Halbleitermaterial aufweist, aus welcher der Wellenleiter (35, 45) ausgebildet ist, wobei der Koppler auf dem Halbleiter-auf-Isolator-Substrat (1) ausgebildet ist, wobei die Struktur einen Lichtinjektor (5, 18, 20) und einen adiabatischen Kollektor (4) aufweist, der aus einer invertierten Nano-Spitze besteht, die ausgehend von der dünnen Schicht aus Halbleitermaterial (9) gebildet ist, wobei der Injektor auf dem Isolator (3) gebildet ist und eine Aufnahmefläche (7, 22) zum Aufnehmen eines Endabschnitts der Lichtleitfaser (6) aufweist, wobei der adiabatische Kollektor (4) einen Querschnitt hat, der sich von einem ersten Endabschnitt auf der Seite des Endabschnitts der Lichtleitfaser (6) bis zu einem zweiten Endabschnitt vergrößert, der sich an den Wellenleiter (35, 45) anschließt, wobei der Injektor (5, 18, 20) den adiabatischen Kollektor (4) überdeckt, **dadurch gekennzeichnet, dass** der Injektor (5, 18, 20) in Form eines Stegwellenleiters vorl iegt.

2. Struktur nach Anspruch 1, wobei der den Injektor bildende Steg des Wellenleiters eine unveränderliche Breite hat.

3. Struktur nach Anspruch 1, wobei der den Injektor bildende Steg des Wellenleiters eine adiabatische Form hat, wobei seine Breite ausgehend von seiner Aufnahmefläche zum Aufnehmen des Endabschnitts der Lichtleitfaser abnimmt.

4. Struktur nach Anspruch 3, wobei die Breite des den Injektor (20) bildenden Stegs des Wellenleiters (21) linear abnimmt.

5. Struktur nach einem der Ansprüche 1 bis 4, wobei die Breite der den Kollektor bildenden Nano-Spitze von seinem zweiten Endabschnitt ausgehend in einer Art und Weise abnimmt, die ausgewählt ist aus einer linearen Abnahme, einer polynomischen Abnahme und einer exponentiellen Abnahme.

6. Struktur nach einem der Ansprüche 1 bis 5, enthaltend eine Kapselungsschicht aus elektrisch isolierendem Material.

7. Struktur nach Anspruch 6, wobei die Kapselungsschicht aus Siliziumoxid besteht.

8. Struktur nach einem der Ansprüche 1 bis 7, wobei der Kollektor (4) aus einem Material besteht, das ausgewählt ist aus Silizium, InP und GaAs.

9. Struktur nach einem der Ansprüche 1 bis 8, wobei der Injektor (4) aus einem Material besteht, das ausgewählt ist aus mit Silizium-Nanokristallen beladenem Siliziumdioxid, mit Silizium-Nanokristallen beladenem Siliziumnitrid und mit Silizium-Nanokristallen beladenem oder nicht beladenem SiON.

10. Struktur nach Anspruch 1, wobei das Halbleiter-auf-Isolator-Substrat (1) ein Silizium-auf-Isolator-Substrat ist.

11. Struktur nach Anspruch 10, wobei das Silizium-auf-Isolator-Substrat (1) einen Träger (2) aufweist, der aufeinanderfolgend eine Siliziumoxidschicht (3) und eine dünne Siliziumschicht trägt.

12. Verfahren zum Herstellen einer Struktur mit einem Wellenleiter (35, 45) und einem Lichtkoppler, wobei die Struktur auf einem Halbleiter-auf-Isolator-Substrat (1) ausgebildet ist, wobei der Lichtkoppler eine Lichtkopplung zwischen dem Wellenleiter und einer Lichtleitfaser (6) ermöglicht, wobei das Halbleiter-auf-Isolator-Substrat (1) eine dünne Schicht aus Halbleitermaterial (9) aufweist, aus welcher der Wellenleiter (35, 45) ausgebildet ist, wobei der Koppler auf dem Halbleiter-auf-Isolator-Substrat (1) ausgebildet ist, wobei das Verfahren die nachfolgenden Schritte umfasst:

- Ausbilden eines adiabatischen Kollektors (4) in Form einer invertierten Nano-Spitze aus der dünnen Schicht durch Ätzen der dünnen Schicht (9) bis zum Erreichen des Isolators (3),
- Auftragen einer Schicht (11) aus einem Material, das dazu bestimmt ist, einen Lichtinjektor zu bilden, auf die dünne Schicht,
- Ausbilden des Lichtinjektors in Form eines Stegwellenleiters (5), der den adiabatischen Kollektor (4) überdeckt, aus der dünnen Materialschicht (11).

**Claims**

1. Structure comprising a waveguide (35, 45) and a light coupler, made on a semiconductor-on-insulator substrate (1), the light coupler allowing a light coupling between the waveguide and an optical fiber (6), the semiconductor-on-insulator substrate (1) comprising a thin layer of semiconducting material (9) in which the waveguide (35, 45) is made, the coupler being made on the semiconductor-on-insulator substrate (1), the structure comprising a light injector (5, 18, 20) and an adiabatic collector (4) made up with an inverted nanotip formed from the thin layer of semiconducting material (9), the injector being formed on the insulator (3) and having a face (7, 22) for receiving an end of the optical fiber (6), the adiabatic collector (4) having a cross-section which increases from a first end located on the side of said end of the optical fiber (6) up to a second end which connects to the waveguide (35, 45), the injector (5, 18, 20) covering the adiabatic collector (4), **characterized in that** the injector (5, 18, 20) has a rib waveguide shape.

2. Structure according to claim 1, wherein the waveguide rib forming the injector has invariant width.

3. Structure according to claim 1, wherein the rib of the waveguide forming the injector has an adiabatic shape, its width decreasing from its face for receiving the end of the optical fiber.

4. Structure according to claim 3, wherein the width of the rib of the waveguide (21) forming the injector (20) decreases linearly.

5. Structure according to any of claims 1 to 4, wherein the width of the nanotip forming the collector decreases from its second end in a way selected from a linear decrease, a polynomial decrease or an exponential decrease.

6. Structure according to any of claims 1 to 5, including an encapsulation layer in an electrically insulating material.

**7.** Structure according to claim 6, wherein the encapsulation layer is in silicon oxide.

**8.** Structure according to any of claims 1 to 7, wherein the collector (4) is in a material selected from silicon, InP and GaAs.

**9.** Structure according to any of claims 1 to 8, wherein the injector (4) is in a material selected from silica filled with silicon nanocrystals, silicon nitride filled with silicon nanocrystals and SiON either filled with silicon nanocrystals or not.

**10.** Structure according to claim 1, wherein the semiconductor-on-insulator substrate (1) is a silicon-on-insulator substrate.

**11.** Structure according to claim 10, wherein the silicon-on-insulator substrate (1) comprises a support (2) successively supporting a layer of silicon oxide (3) and a thin silicon layer.

**12.** Method for making a structure comprising a waveguide (35, 45) and a light coupler, the structure being made on a semiconductor-on-insulator substrate (1), the light coupler allowing a light coupling between the waveguide and an optical fiber (6), the semiconductor-on-insulator substrate (1) comprising a thin layer or semiconducting material (9) in which the waveguide (35, 45) is made, the coupler being made on the semiconductor-on-insulator substrate (1), the method comprising the following steps:

- making in the thin layer, an adiabatic collector (4) as an inverted nanotip, by etching the thin layer (9) until the insulator (3) is reached,
- depositing, on the etched thin layer, a layer (11) of a material intended to form the light injector,
- making in said material layer (11), the light injector as a rib waveguide (5) covering the adiabatic collector (4).

FIG. 1

FIG. 2A

FIG. 2B

FIG. 2C

FIG. 2D

FIG. 2E

FIG. 2F

FIG. 3A

FIG. 3B

FIG. 3C

FIG. 3D

FIG. 4

FIG. 5

FIG. 9

FIG. 8

FIG. 7

FIG. 6

FIG. 10

FIG. 11

## RÉFÉRENCES CITÉES DANS LA DESCRIPTION

**Documents brevets cités dans la description**

- EP 1400822 A

**Littérature non-brevet citée dans la description**

- **J.V. GALAN et al.** Polarization insensitive low-loss coupling technique between SOI waveguides and high mode field diameter single-mode fibers. *Optics Express,* 28 Mai 2007, vol. 15 (11), 7058-7065
- **G. ROELKENS et al.** Efficient silicon-on-insulator fiber coupler fabricated using 248-nm-deep UV lithography. *IEEE Photonics Technology Letters,* Décembre 2005, vol. 17 (12), 2613-2615
- **K. YAMADA et al.** Silicon Wire Waveguiding System : Fundamental Characteristics and Applications. *Electronics and Communications in Japan,* 2006, vol. 89 (3